# EUROPEAN PATENT SPECIFICATION

(11) **EP 2 325 407 B1**
(45) Date of publication and mention of the grant of the patent: **24.07.2019**
(21) Application number: 10191070.1
(22) Date of filing: 12.11.2010
(51) Int. Cl.: E03F 5/10, F15D 1/00, F15C 1/16, F16K 31/30, F16K 31/46

(54) **Bypass valve**
Umgehungsventil
Soupape de dérivation

(30) Priority: 13.11.2009 GB 0919880
(43) Date of publication of application: 25.05.2011
(73) Proprietor: ACO Technologies plc, Shefford, Bedfordshire SG17 5TE (GB)
(72) Inventor: Canney, James, Shefford, Hertfordshire SG17 5TE (GB); Robinson, Neill, Shefford, Hertfordshire SG17 5TE (GB)
(74) Representative: CMS Cameron McKenna Nabarro Olswang LLP

(56) References cited:
- EP-A1- 0 312 271
- WO-A1-2007/052243
- DE-A1- 19 615 206
- DE-U1- 29 920 430
- GB-A- 2 254 938
- GB-A- 2 267 976
- KR-B1- 100 784 989

## Description

### Background

This invention relates to vortex flow control valves, and in particular to bypass valves for vortex flow control valves.

Flow rates into waste water systems must be limited in order to prevent over-loading and possible damage to those systems. Inlet points to waste systems must therefore be equipped to control the flow rate into the waste system to below predetermined limits. Those limits are usually defined by the operator of the waste system and define an allowable flow rate at a given head height.

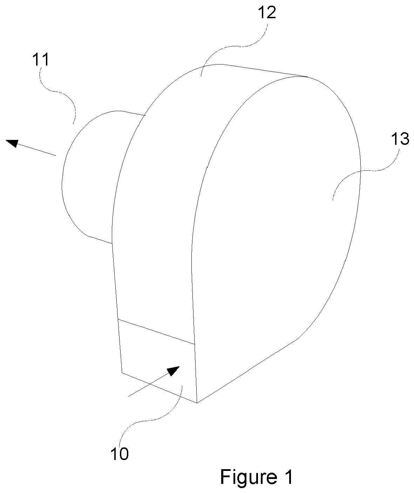

Vortex flow control valves are a known device for controlling flow rate dependant on head height, for example as described in GB 2 267 976. They are generally disposed at the outlet of a liquid collection chamber which forms the inlet to the waste system. Figure 1 shows a schematic diagram of a typical device. The device comprises an inlet 10 and an outlet 11 connected by a vortex chamber 12. At low flow rates, i.e. with a low head height, water flows turbulently from the inlet 10 to the outlet 11. At higher flow rates, i.e. with a larger head height, the shape of the vortex chamber 12 induces a vortex in the flow as the water swirls around that chamber 12. The vortex causes an increase in back pressure leading to a limitation in flow rate for a given head-height.

Vortex valves may fail due to blockage of the inlet by foreign matter or objects, requiring clearance to resume operation. Blockages of the valve may result in an accumulation of water in the collection chamber in which the device is located, thereby making access to the device difficult and potentially dangerous. In order to allow drainage of a collection chamber in the event of a blockage, the vortex valve may be provided with a bypass valve (for example as described in EP 0 312 271, GB 2 254 938, KR 100 784 989, and WO2007/052243) which releases water through the outlet 11, bypassing any blockage in the inlet 10. The bypass valve may be located on the back face 13 of the vortex valve, or at any other convenient location that will allow liquid to flow from the collection chamber to the outlet 12, or pipe to which the outlet is connected, bypassing a blockage. In normal operation the bypass valve remains closed, but in the event of a blockage an operator can open the valve to allow the chamber to drain. A remote actuation device (a rod or handle extending to the surface) is usually provided to allow opening of the bypass valve without requiring the operator to enter the water in the collection chamber. Once the water has drained through the bypass valve the vortex valve can be accessed more easily for cleaning.

Means are often provided to retain the bypass valve in the open position, for example by the provision of a hook on the operating handle or rod. However, if the operator forgets to release the retention device the bypass valve will remain permanently open and thereby prevent the vortex valve from operating.

DE 196 15 206 and DE 299 20 430 describe flow-control valves controlled by a float.

### Summary

There is provided a bypass valve for a vortex flow control valve, the bypass valve being movable between an open position and a closed position and comprising an opening actuator for moving the bypass valve from the closed position to the open position, a closing actuator comprising a float for moving the bypass valve from the open position to the closed position, wherein the bypass valve is configured such that; when the bypass valve is placed in the open position, it will remain in the open position in the absence of external mechanical input, and when the bypass valve is placed in the closed position, it will remain in the closed position in the absence of manual input.

A selection of optional features is set out in the dependent claims.

### Brief Description of the Drawings

Embodiments of the invention will be described, by way of example, with reference to the following drawings, in which;
Figure 1 shows a schematic diagram of a prior-art vortex flow control valve; and
Figure 2 shows a schematic diagram of a vortex flow control valve equipped with a bypass valve according to an embodiment of the invention.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

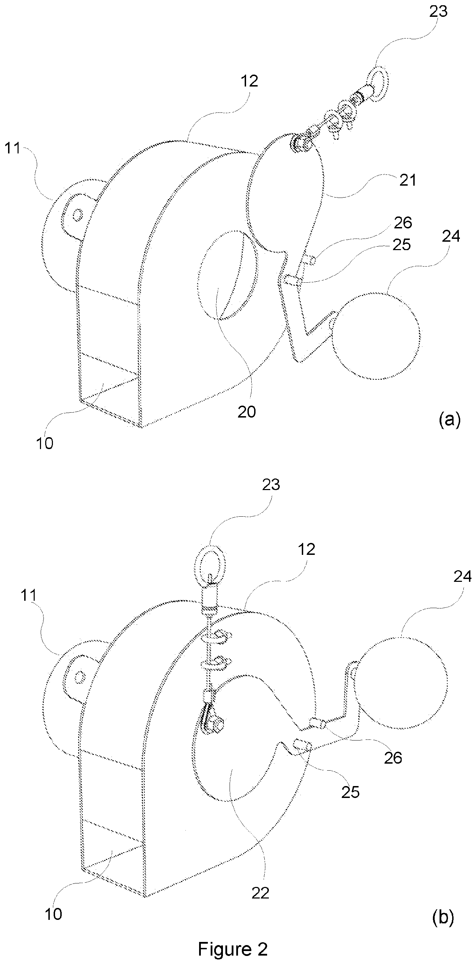

Figure 2 shows a schematic diagram of a vortex flow control valve equipped with a bypass valve in (a) the open position, and (b) the closed position.

The vortex valve has a bypass opening 20 which is opened and closed by bypass valve 21. In the open position (a) the bypass opening 20 is unobstructed, allowing water to flow into the vortex chamber 12, bypassing the inlet 10 which may be blocked, and out of the outlet 11, thus draining the water from the chamber in which the vortex valve is located. In the closed position (b) the flow control part 22 of the bypass valve covers the bypass opening 20 and the vortex valve operates in the normal manner. The flow control part and bypass opening are preferably configured to form a seal such that air trapped in the vortex chamber cannot escape, but the operation of the bypass system described herein is unaffected by the presence or absence of such a seal. Any conventional means of providing such a seal may be utilized. The bypass valve 21 is configured to remain, in the absence of mechanical or manual input, in either the open or closed position in which it was last placed.

The bypass valve 21 is provided with an opening actuator 23 that allows the bypass valve to be moved from the closed position (b) to the open position (a) if a blockage occurs requiring the chamber to be drained. In Figure 2 the actuator is shown as a rod or cable extending to the top of the chamber such that the valve can be opened without requiring an operator to descend into the water at the bottom of the chamber. However, any suitable means to open the bypass valve may be utilized.

Bypass valve 21 is also provided with a closing actuator which comprises a float 24. The float 24 is configured such that as the water level in the chamber rises the float acts to move the bypass valve 21 from the open position (a) to the closed position (b). The closing actuator therefore prevents the bypass valve 21 remaining in the open position (a) when there is water in the chamber that requires operation of the vortex valve. If the bypass valve is left in the open position (a) (as described above the bypass valve is configured to remain in the open position when it has been placed into that position using the opening actuator), once the chamber starts to accumulate water the float 24 is pushed upwards in accordance with Archimedes principle and exerts a force to move the bypass valve 21 to the closed position (b), thus restoring correct operation of the vortex valve. The closing actuator thus provides mechanical means to return the closure from the open position (a) to the closed position (b) without direct manual intervention.

In the embodiment shown in Figure 2 the above-described functionality is provided by the bypass valve 21 being mounted on a pivot 25 which allows rotation between the open (a) and the closed (b) position. A stop 26 is provided to stop the rotation of the bypass valve at the open (a) and closed (b) positions. The relative shape of the valve and positioning of the pivot 25 and stop 26 defines the open (a) and closed (b) positions such that the bypass valve 21 will remain in either of those positions following movement to that position.

The relative position of the opening actuator 23 to the other parts of the bypass valve 21 allows the force and movement required to move the bypass valve 21 from the closed (b) to the open (a) position to be defined.

The relative position of the float 24 to the other parts of the bypass valve 21 allows the water level which will cause movement of the valve from the open position (a) to the closed position (b) to be defined. The buoyancy of the float 24 is selected such that the force provided by a rising water level in the chamber causes movement of the bypass valve 21 to the closed position when the water level reaches a predetermined point.

The selection of appropriate shapes, sizes and other parameters for the bypass valve is within the skill of the skilled reader once they are acquainted with the above description of the mechanism of action of the bypass valve and its intended mode of operation.

The bypass valve may be configured to operate in conjunction with vortex valves designed for use in collection chambers with a sump below the vortex valve, and also in chambers without a sump, as typically found in sewerage systems where it is undesirable for water to remain in the chamber. A bypass valve for a chamber with a sump may be configured such that the closing actuator extends below the bottom of the vortex valve such that it is actuated before the water level reaches the vortex valve. In systems without a sump the closing actuator must be configured such that it does not interfere with the bottom of the chamber, which will usually lie immediately at the bottom of the vortex valve.

The precise configuration and size of the bypass valve will be designed in accordance with the particular requirements of each implementation, for example dependent on the water level at which actuation should occur, the size of the vortex valve, and its location within the chamber. These design parameters will all be understood by the skilled person who, once familiar with the operation described herein will be capable of constructing the described bypass valve for a range of applications.

The float shown in Figure 1 is spherical, but other shapes may be utilized as required. For example, in the case of a system without a sump a cuboid shape may be preferable to allow a closer fit to the bottom of the chamber and thus earlier activation of the closing actuator.

When the vortex valve is submerged and hence operating to restrict flow out of the chamber, the float acts to provide a positive closing force on the bypass valve, thereby preventing accidentally opening, for example due to a foreign object striking the bypass valve.

The closing actuator may be provided by other means than the configuration shown in Figure 2. As will be appreciated, other mechanical configurations may be utilized to close the bypass valve in response to a rising water level.

In the embodiments shown in the figures the bypass opening is located on the back face of the vortex valve but that opening, and the associated bypass valve, may be located at any convenient location on the vortex valve. For example, the opening may be located on the output of the vortex valve between the vortex chamber and the wall of the chamber.

The bypass valve has been described herein in conjunction with a vortex valve, but as will be appreciated, while the bypass valve provides particular advantages when utilized with a vortex valve, it may also be utilized to open and close other types of outlets. Furthermore, the bypass valve may be provided as a stand-alone article, for example for fitment to existing devices.

As will be appreciated the closing actuator is configured to move the valve directly from the open position to the closed position, and not to retain the valve in, or move the valve to, any intermediate positions. That is, the bypass valve is an 'on or off' valve, and does not provide for intermediate openings.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

It will be understood that the above description of a preferred embodiment is given by way of example only and that various modifications may be made by those skilled in the art.

Although various embodiments have been described above with a certain degree of particularity, or with reference to one or more individual embodiments, those skilled in the art could make numerous alterations to the disclosed embodiments without departing from the scope of the claims.

## Claims

1. A bypass valve (21) for a vortex flow control valve, the bypass valve (21) being movable between an open position and a closed position and comprising
an opening actuator (23) for moving the bypass valve (21) from the closed position to the open position,
a closing actuator comprising a float (24) for moving the bypass valve (21) from the open position to the closed position,
wherein the bypass valve (21) is configured such that;
when the bypass valve (21) is placed in the open position, it will remain in the open position in the absence of external mechanical input, and
when the bypass valve (21) is placed in the closed position, it will remain in the closed position in the absence of manual input.

2. A bypass valve (21) according to claim 1, wherein the opening actuator (23) is a rod or cable to enable remote opening of the valve (21).

3. A vortex flow control valve comprising a bypass opening (20) and a bypass valve (21) as claimed in any preceding claim, wherein the bypass valve (21) is configured to open and close the bypass opening (20).

4. A vortex flow control valve according to claim 3 configured such that when the vortex flow control valve is positioned in a liquid collection chamber, the closing actuator closes the bypass valve (21) in response to a water level below the bottom of the vortex flow control valve.

5. A vortex flow control valve according to claim 3 configured such that when the vortex flow control valve is positioned in a liquid collection chamber, the closing actuator closes the bypass valve (21) in response to a water level above the bottom of the vortex flow control valve.

6. A vortex flow control valve according to any of claims 3 to 5 wherein the bypass opening (20) is located in the vortex chamber (12) of the vortex flow control valve.

## Patentansprüche

1. Bypassventil (21) für ein Wirbelstromregelventil, wobei das Bypassventil (21) zwischen einer geöffneten Position und einer geschlossenen Position beweglich ist und ein Öffnungsstellglied (23) zum Bewegen des Bypassventils (21) aus der geschlossenen Position in die geöffnete Position umfasst, ein Schließstellglied, das einen Schwimmer (24) zum Bewegen des Bypassventils (21) aus der geöffneten Position in die geschlossene Position umfasst, wobei das Bypassventil (21) derart konfiguriert ist, dass;
wenn das Bypassventil (21) in die geöffnete Position gebracht wird, es in der geöffneten Position bleibt, wenn keine externe mechanische Eingabe erfolgt, und wenn das Bypassventil (21) in die geschlossene Position gebracht wird, es in der geschlossenen Position bleibt, wenn keine manuelle Eingabe erfolgt.

2. Bypassventil (21) nach Anspruch 1, wobei das Öffnungsstellglied (23) eine Stange oder ein Seil ist, um ein ferngesteuertes Öffnen des Ventils (21) zu ermöglichen.

3. Wirbelstromregelventil umfassend eine Bypassöffnung (20) und ein Bypassventil (21), wie in einem vorhergehenden Anspruch beansprucht, wobei das Bypassventil (21) konfiguriert ist, um die Bypassöffnung (20) zu öffnen und zu schließen.

4. Wirbelstromregelventil nach Anspruch 3, das derart konfiguriert ist, dass, wenn das Wirbelstromregelventil in einer Flüssigkeitssammelkammer positioniert ist, das Schließstellglied das Bypassventil (21) als Reaktion auf einen Wasserstand unterhalb des Bodens des Wirbelstromregelventils schließt.

5. Wirbelstromregelventil nach Anspruch 3, das derart konfiguriert ist, dass, wenn das Wirbelstromregelventil in einer Flüssigkeitssammelkammer positioniert ist, das Schließstellglied das Bypassventil (21) als Reaktion auf einen Wasserstand unterhalb des Bodens des Wirbelstromregelventils schließt.

6. Wirbelstromregelventil nach einem der Ansprüche 3 bis 5, wobei die Bypassöffnung (20) in der Wirbelkammer (12) des Wirbelstromregelventils angeordnet ist.

## Revendications

1. Soupape de dérivation (21) destinée à une soupape de régulation d'écoulement tourbillonnaire, la soupape de dérivation (21) étant mobile entre une position ouverte et une position fermée, et comprenant un actionneur d'ouverture (23) permettant de déplacer la soupape de dérivation (21) de la position fermée vers la position ouverte, un actionneur de fermeture comprenant un flotteur (24) permettant de déplacer la soupape de dérivation (21) de la position ouverte vers la position fermée, la soupape de dérivation (21) étant configurée de telle sorte que,
lorsque la soupape de dérivation (21) est placée dans la position ouverte, elle reste dans cette position en l'absence d'entrée mécanique externe, et lorsque la soupape de dérivation (21) est placée dans la position fermée, elle reste dans cette position en l'absence d'entrée manuelle.

2. Soupape de dérivation (21) selon la revendication 1, dans laquelle l'actionneur d'ouverture (23) est une tige ou un câble permettant l'ouverture à distance de la soupape (21).

3. Soupape de régulation d'écoulement tourbillonnaire comprenant une ouverture de dérivation (20) et une soupape de dérivation (21) selon l'une quelconque des revendications précédentes, la soupape de dérivation (21) étant configurée pour ouvrir et fermer l'ouverture de dérivation (20).

4. Soupape de régulation d'écoulement tourbillonnaire selon la revendication 3, configurée de telle sorte que, lorsque la soupape de régulation d'écoulement tourbillonnaire est positionnée dans une chambre de collecte de liquide, l'actionneur de fermeture ferme la soupape de dérivation (21) en réaction à un niveau d'eau se trouvant en dessous du fond de la soupape de régulation d'écoulement tourbillonnaire.

5. Soupape de régulation d'écoulement tourbillonnaire selon la revendication 3, configurée de telle sorte que, lorsque la soupape de régulation d'écoulement tourbillonnaire est positionnée dans une chambre de collecte de liquide, l'actionneur de fermeture ferme la soupape de dérivation (21) en réaction à un niveau d'eau se trouvant au-dessus du fond de la soupape de régulation d'écoulement tourbillonnaire.

6. Soupape de régulation d'écoulement tourbillonnaire selon l'une quelconque des revendications 3 à 5, dans laquelle l'ouverture de dérivation (20) est située dans la chambre à tourbillon (12) de la soupape de régulation d'écoulement tourbillonnaire.
